# EUROPÄISCHE PATENTSCHRIFT

(11) **EP 3 609 901 B1**
(45) Veröffentlichungstag und Bekanntmachung des Hinweises auf die Patenterteilung: **08.07.2020**
(21) Anmeldenummer: 17717177.4
(22) Anmeldetag: 13.04.2017
(51) Int. Cl.: C07F 17/00

(54) **VERFAHREN ZUR HERSTELLUNG KATIONISCHER SILICIUM(II)-VERBINDUNGEN**
METHOD FOR PRODUCING CATIONIC SILICON(II) COMPOUNDS
PROCÉDÉ POUR LA PRÉPARATION DE COMPOSÉS CATIONIQUES DU SILICIUM (II)

(43) Veröffentlichungstag der Anmeldung: 19.02.2020
(73) Patentinhaber: Wacker Chemie AG, 81737 München (DE)
(72) Erfinder: FRITZ-LANGHALS, Elke, 85521 Ottobrunn (DE)
(74) Vertreter: Mai, Marit
(86) Internationale Anmeldenummer: PCT/EP2017/058936
(87) Internationale Veröffentlichungsnummer: WO 2018/188749

(56) Entgegenhaltungen:
- PETER JUTZI: "The Pentamethylcyclopentadienylsilicon(II) Cation: Synthesis, Characterization, and Reactivity", CHEMISTRY - A EUROPEAN JOURNAL, Bd. 20, Nr. 30, 1. Juli 2014 (2014-07-01), Seiten 9192-9207, XP055333466, ISSN: 0947-6539, DOI: 10.1002/chem.201402163 in der Anmeldung erwähnt

## Beschreibung

Die Erfindung betrifft ein Verfahren zur Herstellung kationischer Si(II)-Verbindungen.

Kationische Silicium(II)-Verbindungen sind hochreaktive Verbindungen, die aufgrund ihrer Elektronenstruktur insbesondere für katalytische Zwecke von technischem Interesse sind. Dem Einsatz dieser Verbindungsklasse stand bislang insbesondere die mangelnde synthetische Zugänglichkeit im Wege. Die Herstellung der Verbindung (C₅Me₅)Si⁺B(C₆F₅)₄⁻ aus Silicocen, (C₅Me₅)₂Si, kann - wie in Chem. Eur. J. 2014, 20, 9192 beschrieben - beispielsweise ausschließlich durch Umsetzung von Silicocen mit der speziellen Protonensäure (C₅H₂Me₅)⁺B(C₆F₅)₄⁻ erfolgen, welche nur in einer sehr aufwändigen, teilweise sicherheitskritischen 7-stufigen Tieftemperatursynthese gemäß Organometallics 2000, 19, 1442 in Verbindung mit Science, 2004, 305, 849 zugänglich ist. Einfacher zugängliche Protonensäuren führen stets, wie in J. Organomet. Chem. 1993, 446, 139 ausgeführt, zur oxidativen Addition unter Bildung eines Addukts mit vierwertigem Silicium.

Es bestand daher ein Bedarf an einem einfacheren Verfahren, mit welchem kationische Silicium(II)-Verbindungen zugänglich gemacht werden können.

Gegenstand der Erfindung ist ein Verfahren zur Herstellung von Verbindungen mit einem kationischen Silicium(II)-Zentrum der allgemeinen Formel **I**

**([Si(II)Cp]⁺)a X^{a-}** (I)

durch Umsetzung der Silicium(II)-Verbindungen der allgemeinen Formel **II**

**[(HR^{b})Si(II)Cp]** (II)

mit einer carbokationischen Verbindung der allgemeinen Formel(III)

**(R^{c}₃C⁺)**ₐ**X^{a-}** (III)

wobei
**Cp** einen π-gebundenen, formal negativ geladenen,
unsubstituierten oder substituierten Cyclopentadienylrest, der die allgemeine Formel (IV) aufweist,
- **X^{a-}**: ein **a** wertiges Anion,
- a: die Werte 1, 2 oder 3,
- **HR^{b}**: ein mit den Resten **R^{x}** substituierter, formal negativ geladener Cyclopentadienylrest der allgemeinen Formel **V** 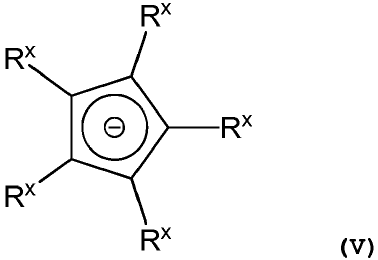
- **R^{X}**: unabhängig voneinander Wasserstoff, lineare oder verzweigte, acyclische oder cyclische, gesättigte oder ein- oder mehrfach ungesättigte C1-C20 Alkyl- oder C6-C20 Arylreste bedeuten, mit der Maßgabe, dass mindestens einer der Reste **R^{x}** eine Gruppe **CHR¹R²** bedeutet,
- **R¹** und **R²**: unabhängig voneinander Wasserstoff, lineare oder verzweigte, acyclische oder cyclische, gesättigte oder ein- oder mehrfach ungesättigte C1-C20 Alkyl- oder C6-C20 Arylreste bedeuten und
- **R^{c}**: einwertige aromatische Reste bedeuten, die unsubstituiert oder substituiert sein können mit Halogenatomen oder einwertigen oder mehrwertigen organischen Resten, die zur Bildung anellierter Ringe auch miteinander verbunden sein können.

Es wurde überraschend gefunden, dass kationische Silicium(II)-Verbindungen durch Übertragung eines negativ geladenen Wasserstoffatoms, eines Hydridions, auf eine carbokationische Verbindung der allgemeinen Formel **III** hergestellt werden können. Bei dieser Reaktion erfolgt selektiv die Übertragung eines negativ geladenen Wasserstoffatoms, eines Hydridions, aus einer Gruppe **CHR¹R²** der Reste **R^{x},** welche in **HR^{b}** vorliegt, auf das Carbokation **R^{c}₃C⁺,** wobei sich neben der gewünschten kationischen Si(II)-Verbindung **[Si(II)Cp]⁺** eine Verbindung **R^{c}₃C-H** bildet. Das Gegenanion **X^{a-}** des Carbokations **R^{C}₃C⁺** bildet nach der Umsetzung das Gegenanion der kationischen Silicium(II)verbindung der allgemeinen Formel I.

Carbokationen der allgemeinen Formel **III** sind synthetisch sehr gut zugänglich. Daher wird die Zugänglichkeit der kationischen Silicium(II)-Verbindungen auf diese Weise wesentlich vereinfacht. Ein weiterer Vorteil ist, dass die Umsetzung mit hoher Ausbeute erfolgt.

Exemplarisch wird die bei dem Verfahren ablaufende Reaktion erläutert unter Einsatz eines bevorzugten Cyclopentadienylrests **HR^{b} in** der Bedeutung **Cp-CHR¹R²** in der Verbindung mit der allgemeinen Formel **II** und unter Einsatz eines bevorzugten Carbokations, nämlich des Trityliumkations **Ph₃C⁺** in der Verbindung der allgemeinen Formel **III.** Bei dem Verfahren wird ein Hydridion auf **Ph₃C⁺** übertragen unter Bildung von Triphenylmethan, **Ph₃C-H,** und der Verbindung **Cp=CR¹R²** (entspricht **R^{b}**) gemäß der Reaktionsgleichung 1,

**[(Cp-CHR¹R²) Si (II) Cp] + Ph₃C⁺X⁻ => Cp=CR¹R²** + **(Si (II) Cp) ⁺** + **HCPh₃** + **X⁻** (1)

Durch die Abspaltung eines Hydridions aus **HR^{b}** erhält das Siliciumzentrum eine positive Ladung.

Die Verbindung **X⁻** bildet das Gegenion zu der kationischen Silicium(II)-Verbindung **(CpSi)⁺.**

Der **Cp** Rest in der Verbindung mit der allgemeinen Formel **I** hat die allgemeine Formel **IV**

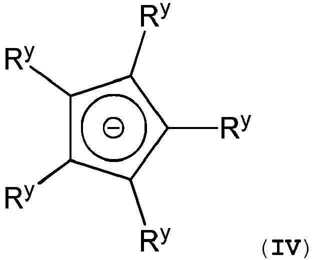

Die Reste **R^{y}** bedeuten bevorzugt unabhängig voneinander bevorzugt Wasserstoff, lineare oder verzweigte, acyclische oder cyclische, gesättigte oder ein- oder mehrfach ungesättigte C1-C20 Alkyl- oder C6-C20 Aryl-, besonders bevorzugt C1-C3 Alkyl-, ganz besonders bevorzugt Methylreste.
Beispiele für Reste **R^{y}** sind Alkylreste, wie der Methyl-,Ethyl-, n-Propyl-, iso-Propyl-, n-Butyl-, sec.-Butyl-, iso-Butyl-, tert.-Butyl-, n-Pentyl-, sec.-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der α- und der β-Phenylethylrest.

**X^{a-}** bedeutet ein **a** wertiges Anion, welches sowohl anorganisch als auch organisch sein kann. Vorzugsweise hat **a** die Werte 1 und 2, insbesondere 1.

**X^{a-}** ist bevorzugt [ClO₄] , [OTf]⁻, [FSO₃]⁻ oder ein bevorzugt anorganisches bevorzugt komplexes Anion ausgewählt aus Halogeniden der Elemente Bor, Aluminium, Gallium, Germanium, Zinn, Phosphor, Arsen und Antimon, wobei einzelne oder mehrere Halogensubstituenten gegen kohlenstoffhaltige Reste, vorzugsweise C1-C20 unsubstituierte oder mit Halogenatomen substituierte Kohlenwasserstoff- oder Kohlenwasserstoffoxyreste, insbesondere Alkyl-, Aryl- oder Alkoxyreste ersetzt sein können, wobei fluorierte oder chlorierte Kohlenstoffwasserstoffreste besonders bevorzugt sind, oder bevorzugt ein Carborat Anion.

Solche bevorzugten Anionen **X^{a-}** werden wie der Fachkraft bekannt als schwach koordinierende Anionen (weakly coordinating anions, WCA) bezeichnet, da sie eine geringe Affinität zu reaktiven kationischen Strukturen aufweisen. Eine Übersicht über diese Thematik gibt der Artikel von I. Krossing et al. in Chem. Soc. Rev. 2016, 45, 789-899.

Ganz besonders bevorzugt als **X^{a-}** sind die folgenden Anionen: [ClO₄]⁻, [OSO₂CF₃]⁻, [FSO₃]⁻, [BF₄]⁻, [B(CF₃)₄]⁻, [BPh₄]⁻, [B(Ar^{CF3})₄]⁻, [B(Ar^{Cl})₄]⁻, [HB(C₆F₅)₃]⁻, [B(C₆F₅)₄]⁻, [MeB(C₆F₅)₃]⁻, [MeB(C₁₂F₉)₃]⁻, [AlCl₄]⁻ , [AlBr₄]⁻, [AlI₄]⁻, [Al(OR^{PF})₄]⁻_{,} [Al(OR^{HF})₄₁⁻, [Al(OR^{MF})4]⁻, [Cl(Al(OR^{PF})₃}₂]-, [ClAl(OR^{PF})₃]⁻, [(R^{PF}O)₃Al-F-Al(OR^{PF})₃]⁻, [FAl{OC₆F₁₀(C₆F₅)}₃]⁻, [Al₂Br₇]⁻, [GaCl₄]⁻, [Ga₂Cl₇]⁻, [Cl₂Ga(FP)₂]⁻, [Ga(C₆F₅)₄]⁻, [GeBr₃]⁻, [GeCl₃]⁻ , [GeF₆]²⁻, [SnCl₃]⁻, [SnBr₃]⁻, [SnCl₆]²⁻, [PF₆]⁻, [AsF₆]⁻, [As₂F₁₁]⁻, [SbF₆]⁻, [Sb₂Cl₈]²⁻, [Sb₂F₁₁]⁻, [Sb₃F₁₆]⁻, [Sb₄F₂₁]⁻, wobei Ar^{CF3} 3,5-(CF₃)₂C₆H₃, Ar^{Cl} Pentachlophenyl-, OR^{MF} -OC(CH₃)(CF₃)₂, OR^{PF} -OC(CF₃)₃ und OR^{HF} -OC(H)(CF₃)₂ bedeuten, [CB₁₁H₂₁]⁻, [CHB₁₁H₅Cl₆]⁻, [CHB₁₁H₅Br₆]⁻, [CHB₁₁F₁₁]⁻, [C(Et)B₁₁F₁₁]⁻, [CB₁₁(CF₃)₁₂]⁻, [HCB₁₁Cl₁₁]⁻ , [HCB₁₁I₁₁]⁻, [HCB₉H₄Br₅]⁻, [HCB₁₁H₅Br₆]⁻, [HCB₁₁H₅Cl₆]⁻, [CB₁₁Me₅Br₆]⁻, [HCB₁₁Me₅Cl₆]⁻, [CB₁₁H₆X₆]⁻ mit X = Cl, Br oder [B₁₂Cl₁₂]²⁻.

Beispiele für Reste **R^{X}** sind Alkylreste wie der Methyl-, Ethyl-, n-Propyl-, iso-Propyl-, n-Butyl-, sec.-Butyl-, iso-Butyl-, tert.-Butyl-, n-Pentyl-, sec.-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der α- und der β-Phenylethylrest.

Die Reste **R^{x}** in der Verbindung der allgemeinen Formel V bedeuten unabhängig voneinander bevorzugt Wasserstoff, besonders bevorzugt C1-C3 Alkylreste, ganz besonders bevorzugt Methylreste.

Die Reste **R¹** und **R²** bedeuten unabhängig voneinander bevorzugt Wasserstoff, besonders bevorzugt C1-C3 Alkylreste, ganz besonders bevorzugt Methylreste.

Bevorzugte Reste **R^{c} sind** unsubstituierte oder mit Halogenatomen substituierte Phenyl-, Tolyl-, Xylyl-, Mesitylenyl- und Ethylphenylreste.
Insbesondere bevorzugte Reste **R^{c}** sind Phenyl-,Pentafluorphenyl- , Pentachlorphenyl-, o-, m- und p-Tolyl-, Xylyl-, Mesitylenyl- und o-, m- und p-Ethylphenylrest.

Bevorzugte Beispiele für Verbindungen mit der allgemeinen Formel I sind
Ph₃C⁺B (C₆F₅) ₄⁻, Ph₃C⁺BF₄⁻, Ph₃C⁺PF₆⁻, Ph₃C⁺[HCB₁₁Cl₁₁]⁻ und Ph₃C⁺ClO₄⁻.

Bei der Umsetzung gemäß der Reaktionsgleichung 1 entsteht die Verbindung **HCPh₃** und außerdem das Abspaltprodukt **R^{b}**, welches gemäß der exemplarischen Reaktionsgleichung 1 die Bedeutung **Cp=CR¹R²** aufweist. Abspaltprodukte **R^{b}** können in der Reaktionsmischung belassen werden oder aber abgetrennt werden, wenn dies vorteilhaft ist, beispielweise dann, wenn **R^{b}** bei der Anwendung der Verbindung I stört.
Die Abtrennung kann in einer der Fachkraft bekannten Weise erfolgen, beispielsweise destillativ oder durch fraktionierte Kristallisation. Bevorzugt wird beim destillativen Verfahren die Verbindung **R^{b}** abdestilliert, bevorzugt unter vermindertem Druck. Erfolgt die Abtrennung durch Kristallisation, so wird bevorzugt die Verbindung der allgemeinen Formel **I** durch Zugabe eines Fällungsmittels auskristallisiert, die Verbindung der allgemeinen Formel **R^{b}** verbleibt in Lösung und kann beispielsweise abfiltriert werden.

Das molare Verhältnis der Verbindung der allgemeinen Formel **II** und der carbokationischen Verbindung der allgemeinen Formel **III** beträgt bevorzugt mindestens 1:10 und höchstens 10:1, besonders bevorzugt mindestens 1:5 und höchstens 5:1, ganz besonders bevorzugt mindestens 1:3 und höchstens 3:1. Die beiden Komponenten können dabei in beliebiger Reihenfolge vermischt werden, wobei das Vermischen in einer der Fachkraft bekannten Weise erfolgt. Bevorzugt wird die Verbindung der allgemeinen Formel **II** mit der carbokationischen Verbindung der allgemeinen Formel **III** versetzt.

Die erfindungsgemäße Umsetzung kann in Gegenwart einer oder mehrerer weiterer Komponenten durchgeführt werden, beispielsweise in Gegenwart eines Lösemittels oder eines Gemischs aus mehreren Lösemitteln.
Es kann entweder die Verbindung der allgemeinen Formel **II** oder die Verbindung **III** oder es können beide Komponenten in einem Lösemittel oder in einem Lösemittelgemisch gelöst werden. Der Anteil des Lösemittels oder des Lösemittelgemisches beträgt bezogen auf die Summe der Verbindungen der allgemeinen Formel **II** und **III** bevorzugt mindestens 0,1 Gew.% und höchstens die 1000-fache Gewichtsmenge, besonders bevorzugt mindestens 10 Gew.% und höchstens die 100-fache Gewichtsmenge, ganz besonders bevorzugt mindestens 30 Gew.% und höchstens die 10-fache Gewichtsmenge.

Als Lösemittel können beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-*tert*.-butylether, Anisol, Tetrahydrofuran oder Dioxan, oder Nitrile wie z.B. Acetonitril oder Propionitril, eingesetzt werden.

Die erfindungsgemäße Umsetzung zu der Verbindung mit der allgemeinen Formel **I** kann außerdem in Gegenwart von Komponenten erfolgen, die in Gegenwart der Verbindung der allgemeinen Formel I reagieren. Die als Katalysator für die Umsetzung der weiteren Komponenten wirkende Verbindung der allgemeinen Formel **I** wird in diesem Fall in Gegenwart der Reaktanden erzeugt.

Die Umsetzung kann unter Umgebungsdruck oder unter vermindertem oder unter erhöhtem Druck durchgeführt werden.
Der Druck beträgt bevorzugt mindestens 0,01 bar und höchstens 100 bar, besonders bevorzugt mindestens 0,1 bar und höchstens 10 bar, ganz besonders bevorzugt wird die Umsetzung bei Umgebungsdruck durchgeführt.
Die erfindungsgemäße Umsetzung erfolgt bevorzugt bei Temperaturen zwischen mindestens - 100°C und höchstens + 250°C, besonders bevorzugt zwischen mindestens - 20°C und höchstens + 150°C, ganz besonders bevorzugt zwischen mindestens 0°C und höchstens + 100°C.

Die kationische Silicium(II)-Verbindung der allgemeinen Formel **I** kann als Katalysator eingesetzt werden, beispielsweise für Hydrosilylierungen. Wie am Beispiel der Hydrosilylierung gezeigt werden konnte, verlaufen Prozesse, die mit Silicium(II)-Verbindungen der allgemeinen Formel **I** katalysiert werden, besonders einheitlich und ohne nennenswerte Bildung von Nebenprodukten.

Alle vorstehenden Symbole der vorstehenden Formeln weisen ihre Bedeutungen jeweils unabhängig voneinander auf. In allen Formeln ist das Siliciumatom vierwertig.

Es sind, falls jeweils nicht anders angegeben, alle Mengen- und Prozentangaben auf das Gewicht bezogen, und alle Temperaturen 20°C.

### Beispiel

Alle Arbeitsschritte werden unter Ar ausgeführt. 102 mg (0,342 mmol) Silicocen (Cp*₂Si, Cp* = Pentamethylcyclopentadienyl) werden in 3,5 ml Dichlormethan gelöst und bei Raumtemperatur mit 310 mg (0,336 mmol) Trityl-tetrakis(pentafluorphenyl) borat (Ph₃C⁺B(C₆F₅)₄⁻) in 3,5 ml Dichlormethan unter Schütteln versetzt. Die homogene Lösung wird tropfenweise mit n-Decan versetzt, bis ein Feststoff ausfällt. Die überstehende Lösung wird abdekantiert und der Feststoff 3mal mit je 1 ml n-Hexan gewaschen und im Vakuum getrocknet. Der Feststoff besteht aus Cp*Si⁺ B(C₆F₅)₄⁻.
¹H-NMR (CD₂Cl₂) : δ= 2,24 (s, CH₃ von Cp), ¹⁹F-NMR: δ= - 167,5 (m, 2 F), - 163,6 (m, 1 F), - 133,0 (m, 2 F) .
Die Verbindung ist bei Umgebungstemperatur (25°C) über einen Zeitraum von mindestens 3 Monaten stabil.

## Patentansprüche

1. Verfahren zur Herstellung von Verbindungen mit einem kationischen Silicium(II)-Zentrum der allgemeinen Formel **I**
**([Si(II)Cp]⁺)a X^{a-}** (I)
durch Umsetzung der Silicium(II)-Verbindungen der allgemeinen Formel **II**
**[(HR^{b}) Si (II) Cp]** (II)
mit einer carbokationischen Verbindung der allgemeinen Formel(III)
(**R^{c}₃C⁺)ₐ X^{a-}** (III)
wobei
**Cp** einen π-gebundenen, formal negativ geladenen, unsubstituierten oder substituierten Cyclopentadienylrest, der die allgemeine Formel IV 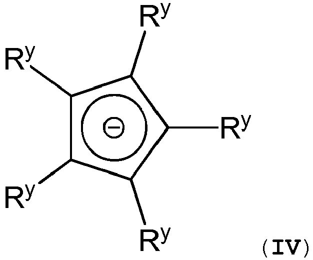
aufweist, wobei
**R^{y}** unabhängig voneinander Wasserstoff, lineare oder verzweigte, acyclische oder cyclische, gesättigte oder ein- oder mehrfach ungesättigte C1-C20 Alkyl- oder C6-C20 Arylreste bedeuten,
**X^{a-}** ein **a** wertiges Anion,
**a** die Werte 1, 2 oder 3,
**HR^{b}** ein mit den Resten **R^{X}** substituierter, formal negativ geladener Cyclopentadienylrest der allgemeinen Formel **V** 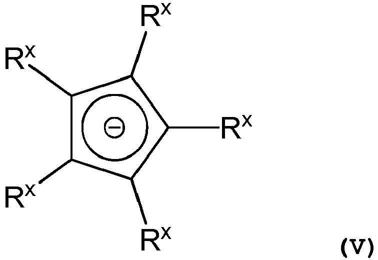
**R^{X}** unabhängig voneinander Wasserstoff, lineare oder verzweigte, acyclische oder cyclische, gesättigte oder ein- oder mehrfach ungesättigte C1-C20 Alkyl- oder C6-C20 Arylreste bedeuten, mit der Maßgabe, dass mindestens einer der Reste **R^{x}** eine Gruppe **CHR¹R²** bedeutet,
**R¹** und **R²** unabhängig voneinander Wasserstoff, lineare oder verzweigte, acyclische oder cyclische, gesättigte oder ein- oder mehrfach ungesättigte C1-C20 Alkyl- oder C6-C20 Arylreste bedeuten und
**R^{c}** einwertige aromatische Reste bedeuten, die unsubstituiert oder substituiert sein können mit Halogenatomen oder einwertigen oder mehrwertigen organischen Resten, die zur Bildung anellierter Ringe auch miteinander verbunden sein können.

2. Verfahren nach Anspruch 1, wobei **X^{a-}** ausgewählt wird aus [ClO₄]⁻, [OTf]⁻, [FSO₃]⁻ und einem Anion, ausgewählt aus Halogeniden der Elemente Bor, Aluminium, Gallium, Germanium, Zinn, Phosphor, Arsen und Antimon, wobei einzelne oder mehrere Halogensubstituenten gegen kohlenstoffhaltige Reste ersetzt sein können und einem Carborat Anion.

3. Verfahren nach einem oder mehreren der vorangehenden Ansprüche, wobei **R¹** und **R²** unabhängig voneinander Wasserstoff oder C1-C3 Alkylreste bedeuten.

4. Verfahren nach einem oder mehreren der vorangehenden Ansprüche, wobei die Reste **R^{c}** ausgewählt werden aus unsubstituierten oder mit Halogenatomen substituierten Phenyl-, Tolyl-, Xylyl-, Mesitylenyl- und Ethylphenylresten.

5. Verfahren nach einem oder mehreren der vorangehenden Ansprüche, wobei **R^{x}** C1-C3 Alkylreste bedeuten.

6. Verfahren nach einem oder mehreren der vorangehenden Ansprüche, welches in aprotischem Lösemittel durchgeführt wird, das ausgewählt wird aus Kohlenwasserstoffen, Chlorkohlenwasserstoffen, Ethern, Nitrilen, Organosilanen, oder Organosiloxanen.

## Claims

1. Process for preparing compounds having a cationic silicon(II) centre of the general formula **I**
**([Si(II)Cp]⁺)ₐ X^{a-}** (I)
by reacting the silicon(II) compounds of the general formula **II**
**[(HR^{b})Si(II)Cp]** (II)
with a carbocationic compound of the general formula **III**
**(R^{C}₃C⁺)** ₐ **X^{a-}** (III)
where
**Cp** is a Π-bonded, formally negatively charged, unsubstituted or substituted cyclopentadienyl radical having the general formula **IV** 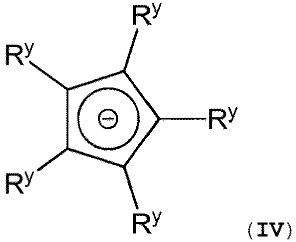 where
**R^{y}** independently of one another are hydrogen, linear or branched, acyclic or cyclic, saturated or mono- or polyunsaturated C1-C20 alkyl or C6-C20 aryl radicals,
**X^{a-}** is an **a**-valent anion,
**a** represents the values 1, 2 or 3,
**HR^{b}** is an **R^{x}-**radical-substituted, formally negatively charged cyclopentadienyl radical of the general formula **V** 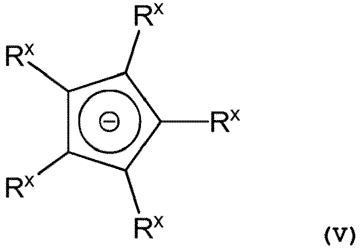
**R^{x}** independently of one another are hydrogen, linear or branched, acyclic or cyclic, saturated or mono- or polyunsaturated C1-C20 alkyl or C6-C20 aryl radicals, with the proviso that at least one of the radicals **R^{x}** is a group **CHR¹R²,**
**R¹** and **R²** independently of one another are hydrogen, linear or branched, acyclic or cyclic, saturated or mono- or polyunsaturated C1-C20 alkyl or C6-C20 aryl radicals and
**R^{c}** are monovalent aromatic radicals which may be unsubstituted or substituted with halogen atoms or monovalent or polyvalent organic radicals which may also be connected to one another to form fused rings.

2. Process according to Claim 1, wherein **X^{a-}** is selected from [ClO₄]⁻, [OTf]⁻, [FSO₃]⁻ and an anion selected from halides of the elements boron, aluminium, gallium, germanium, tin, phosphorus, arsenic and antimony, where individual halogen substituents or a plurality of halogen substituents may be replaced by carbon-containing radicals, and a carborate anion.

3. Process according to one or more of the preceding claims, wherein **R¹** and **R²** independently of one another are hydrogen or C1-C3 alkyl radicals.

4. Process according to one or more of the preceding claims, wherein the radicals **R^{c}** are selected from unsubstituted or halogen-atom-substituted phenyl, tolyl, xylyl, mesitylenyl and ethylphenyl radicals.

5. Process according to one or more of the preceding claims, wherein **R^{x}** are C1-C3 alkyl radicals.

6. Process according to one or more of the preceding claims which is conducted in aprotic solvent selected from hydrocarbons, chlorinated hydrocarbons, ethers, nitriles, organosilanes or organosiloxanes.

## Revendications

1. Procédé pour la préparation de composés comportant un centre de silicium(II) cationique de formule générale **I**
**([Si(II)Cp]⁺)ₐ X^{a-}** (I)
par la transformation des composés de silicium(II) de formule générale **II**
**((HR^{b}) Si(II) Cp]** (II)
avec un composé carbocationique de formule générale **III**
**(R^{c}₃C⁺) aX^{a-}** (III)
**Cp** étant un radical cyclopentadiényle Π-lié, chargé formellement négativement, non substitué ou substitué, qui présente la formule générale IV 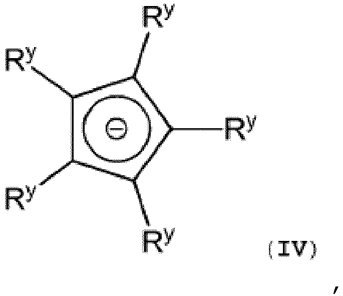
**R^{y}** signifiant, indépendamment les uns des autres, hydrogène, des radicaux C₁₋₂₀-alkyle linéaires ou ramifiés, acycliques ou cycliques, saturés ou monoinsaturés ou polyinsaturés ou des radicaux C₆₋₂₀-aryle,
**X^{a-}** étant un anion **a**-valent,
**a** valant 1, 2 ou 3,
**HR^{b}** signifiant un radical cyclopentadiényle substitué par les radicaux **R^{x},** chargé formellement négativement de formule générale **V** 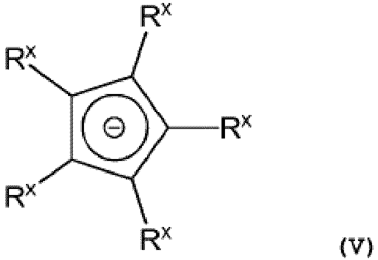
**R^{x}** signifiant, indépendamment les uns des autres, hydrogène, des radicaux C₁₋₂₀-alkyle linéaires ou ramifiés, acycliques ou cycliques, saturés ou monoinsaturés ou polyinsaturés ou des radicaux C₆₋₂₀-aryle, étant entendu qu'au moins un des radicaux **R^{x}** signifie un groupe **CHR¹R²,**
**R¹** et **R²,** indépendamment l'un de l'autre, signifiant hydrogène, des radicaux C₁₋₂₀-alkyle linéaires ou ramifiés, acycliques ou cycliques, saturés ou monoinsaturés ou polyinsaturés ou des radicaux C₆₋₂₀-aryle et
**R^{c}** signifiant des radicaux aromatiques monovalents, qui peuvent être non substitués ou substitués par des atomes d'halogène ou par des radicaux organiques monovalents ou polyvalents, qui peuvent également être reliés les uns avec les autres pour la formation de cycles annelés.

2. Procédé selon la revendication 1, **X^{a-}** étant choisi parmi [ClO₄]⁻, [OTf]⁻, [FSO₃]⁻ et un anion, choisi parmi des halogénures des éléments bore, aluminium, gallium, germanium, zinc, phosphore, arsenic et antimoine, un ou plusieurs substituants halogène pouvant être remplacés par des radicaux contenant du carbone, et un anion carborate.

3. Procédé selon l'une ou plusieurs des revendications précédentes, **R¹** et **R²** signifiant indépendamment l'un de l'autre hydrogène ou des radicaux C₁₋₃-alkyle.

4. Procédé selon l'une ou plusieurs des revendications précédentes, les radicaux **R^{c}** étant choisis parmi des radicaux phényle, tolyle, xylyle, mésityle et éthylphenyle non substitués ou substitués par des atomes d'halogène.

5. Procédé selon l'une ou plusieurs des revendications précédentes, **R^{x}** signifiant des radicaux C₁₋₃-alkyle .

6. Procédé selon l'une ou plusieurs des revendications précédentes, qui est mis en œuvre dans un solvant aprotique, qui est choisi parmi les hydrocarbures, les chlorohydrocarbures, les éthers, les nitriles, les organosilanes et les organosiloxanes.
